# EUROPEAN PATENT APPLICATION

(11) **EP 2 556 777 A1**
(43) Date of publication of application: **13.02.2013**
(21) Application number: 11177340.4
(22) Date of filing: 11.08.2011
(51) Int. Cl.: A47J 36/08

(54) **Improvements in or relating to cookware.**

(71) Applicant: The Cookware Company, Unit 1902-1905 Wanchai, Hong Kong (CN)
(72) Inventor: Hoekstra, Jan, 3600 Genk (BE)
(74) Representative: Gyi, Jeffrey Ivan

(57) **Abstract**

Described herein is a cookware assembly (200) that allows a pot lid (220) to be locked with respect to a pot body (210) by rotation of the pot lid (210) from an open position to a locked position. Channels (262, 264) and a groove (258) are provided in a skirt portion (256) of the pot lid (220) for engaging rivets (242, 244, 246, 248) that hold the handles (236, 238) to the pot body (210). In this way, the groove (258) locks underneath the heads of rivets (242, 244, 246, 248) on the inside of the pot body (210), and no additional projections or protrusions are necessary for engaging with the pot lid (220) for locking. In addition, in the locked position, liquid can be drained from the cookware assembly (200) without the necessity for the provision of holes in the pot lid (220) and/or the pot body (210).

## Description

### Field of the Invention

The present invention relates to improvements in or relating to cookware.

### Background to the Invention

Cookware is known in which a lid or cover can be locked with respect to the main body of a pot or pan on which the lid or cover is to be placed. In addition, some such pots or pans may also include holes through which steam can be vented during cooking and through which excess liquid, for example, water, can be discharged prior to serving the contents inside the pot. Furthermore, some pots and pans may include a number of different types of opening for venting steam and/or discharging excess liquid.

DE-A-10 2008 008 311 discloses a lid or cover for a cooking pot that comprises an annular element having different sized openings around a ring element associated therewith. The different sized openings allow liquid to be discharged in different ways. The annular element is mounted to a retaining ring and a cover plate is located within a groove formed in the annular element. Rotation of the lid or cover relative to the cooking pot aligns one of the different sized openings with a spout in the cooking pot to allow liquid to be discharged from the pot.

JP-A-2005-218482 discloses a cooking pot arrangement comprising a cooking pot and a lid that can be locked in position with respect to the cooking pot. The lid has a downwardly extending flange or rim into which a pair of L-shaped grooves is formed. The grooves are formed at diametrically opposite positions around the flange or rim and engage with diametrically opposed locking pins formed in an upper wall portion of the cooking pot. Each L-shaped groove comprises a vertical notch portion and a connecting horizontal notch portion, the vertical notch portion receiving one of the locking pins when aligned therewith and downward pressure is applied to the lid. Subsequent rotation of the lid with respect to the cooking pot causes each locking pin to move from the vertical notch portion into the horizontal notch portion of each L-shaped groove through an elastically deformable projection so that the lid is locked in position with respect to the cooking pot. The lid is removed from the cooking pot by the actions being performed in the reverse order.

US-A-5 653 881 discloses a cooking pot and lid arrangement that together provide a straining vessel. A spout is formed in the cooking pot and a straining section is provided in a downwardly extending skirt portion of the lid. Co-operating locking elements are provided on the skirt portion of the lid and the inside of the cooking pot. In normal use during cooking, a solid part of the skirt portion seals the spout, but when liquid is to be drained off, the lid is rotated to align the strainer portion thereof with the spout. In this position, the lid is locked with respect to the cooking pot and the pot and lid can be lifted as a unit for draining of liquid from the pot.

EP-A-1 958 551 discloses a cooking pot with a spout through which liquid can be discharged. A plurality of locking pins are provided around the periphery of the upper portion of the cooking pot that can engage with T-shaped grooves formed in a ring portion of a lid. Vertical notches of the T-shaped grooves are aligned with the locking pins when the lid is put on the cooking pot and subsequent rotation of the lid with respect to the cooking pot locks the lid in place with respect to the locking pins located in horizontal notches of the T-shaped grooves. Draining holes of different sizes may be provided in the lid and alignment of one set of draining holes with the spout in the cooking pot is selected when the lid is placed thereon.

In the known cooking pot arrangements described above, the provision of holes in the lids of the cooking pot or the cooking pot itself and that of a spout in the cooking pot is disadvantageous as steam can easily escape from the cooking pot when boiling a liquid therein which reduces the efficiency of cooking and increases the risk of dry-cooking.

### Summary of the Invention

It is therefore an object of the present invention to provide a cooking pot arrangement in which liquid can readily be drained out without the necessity for draining holes in either the pot lid or the pot body.

In accordance with a first aspect of the present invention, there is provided a cooking pot assembly comprising:-
a pot body including a circumferential side wall;
at least one handle fixed to the pot body with at least one fixing element that extend through the side of the pot body; and
a pot lid having a handle portion and a skirt portion, the skirt portion fitting within the circumferential side wall of the pot body;
characterised in that the skirt portion comprises a groove extending around the periphery thereof, and at least one channel formed in the skirt portion and extending into the groove, each channel being operable to receive the at least one fixing element when the pot lid is in a first position with respect to the pot body, the first position corresponding to an open position;
and in that the at least one fixing element is located within the groove when the pot lid is in at least one other position with respect to the pot body, each other position corresponding to a locked position.

The term "open position" is intended to mean a relative position between the pot lid and the pot body when the pot lid can be moved in a direction away from the pot body. The term "locked position" is intended to mean a relative position between the pot lid and the pot body when the pot lid is locked to the pot body and the pot lid and pot body can be moved as a single article.

The cooking pot assembly of the present invention does not have any holes. In one embodiment, the pot lid is placed on the pot body and, after rotation of the pot lid through 90°, either clockwise or anticlockwise, with respect to the pot body is locked thereto. Pressure within the cooking pot body may lift the pot lid within its vertical range of movement to allow steam or water to escape.

In addition, the pot lid locks underneath the heads of rivets on the inside of the pot body, the rivets being used to attach the side handles to the body thereof. In this way, no additional projections or protrusions are necessary for engaging with the pot lid for locking.

Preferably, each fixing element comprises a rivet.

For ease of alignment, the pot lid may include a first symbol indicating the open position of the pot lid with respect to the pot body, and a second symbol indicating the locked position of the pot lid with respect to the pot body.

Additionally, the pot body may further comprise at least one spout formed in the side wall. The positioning of each spout is determined in accordance with one of the locked positions.

A pot holder into which the pot body can be positioned may also be included.

In accordance with another aspect of the present invention, there is provided a cookware set including at least one cooking pot assembly as described above.

### Brief Description of the Drawings

For a better understanding of the present invention, reference will now be made, by way of example only, to the accompanying drawings in which:-
Figure 1 illustrates a partially exploded perspective view of a cooking pot arrangement in accordance with a first embodiment of the present invention;
Figure 2 is similar to Figure 1 but illustrates the cooking pot arrangement with the lid in a locked position;
Figure 3 illustrates an exploded perspective view of a cooking pot arrangement in accordance with a second embodiment of the present invention; and
Figure 4 illustrates the operational steps of the cooking pot arrangement in accordance with the present invention.

### Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

It will be understood that the terms "vertical" and "horizontal" are used herein refer to particular orientations of the Figures and these terms are not limitations to the specific embodiments described herein.

Cookware in accordance with the present invention may come in different shapes and sizes, but, for each size, a cooking pot is usually associated with an appropriately sized lid to form a cooking pot assembly. However, for ease of explanation only one size of cooking pot is illustrated in the Figures and described below.

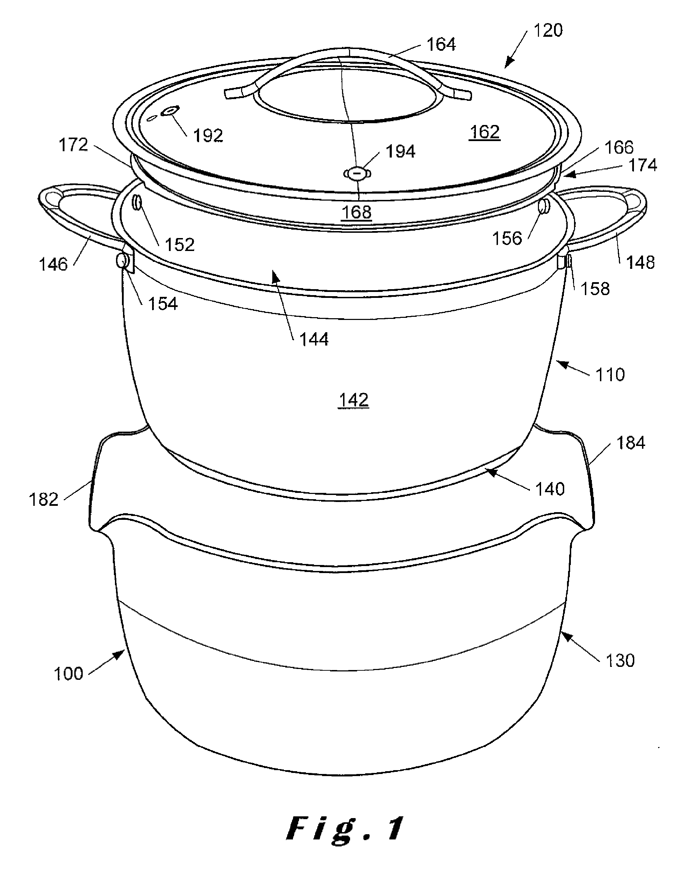

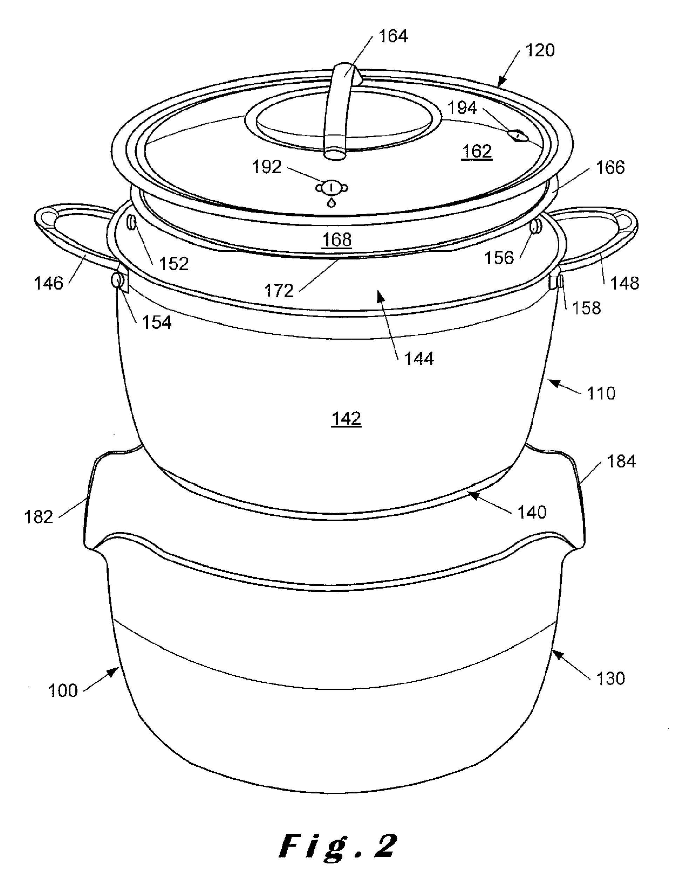

Referring initially to Figures 1 and 2, a cooking pot assembly 100 is shown. The assembly 100 comprises a pot body 110, a pot lid 120 and a pot holder 130. In Figure 1, the cooking pot assembly 100 is shown in the open position, and, in Figure 2, the cooking pot arrangement 100 is shown in the locked position.

By the term "open position" is meant a position where the pot lid can readily be removed from the pot body. By the term "locked position" is meant a position where the pot lid is locked with respect to the pot body so that the pot lid and pot body effectively form the cooking pot assembly which can be manipulated as a single article. However, in the locked position, vertical movement of the pot lid with respect to the pot body can still be achieved as will be described in more detail below.

The pot body 110 comprises a base 140 and a substantially cylindrical side wall 142 which defines an open top portion 144 onto which the pot lid 120 is placed. Two handles 146, 148 are mounted close to the open top portion 144 and are diametrically opposed on the side wall 142 as shown. Each handle 146, 148 is fixed to the side wall 142 by rivets 152, 154, 156, 158. Each rivet 152, 154, 156, 158 extends through the side wall 142 as shown.

Although rivets have been described as the fixing elements for attaching the handles to the pot body, it will be appreciated that other suitable fixing elements can be used, for example, pins, bolts, screws etc.

The pot lid 120 comprises a lid portion 162 on which a handle 164 is mounted. A downwardly extending skirt portion 166 is attached to the lid portion 162. The skirt portion 166 includes a groove 168 that extends around its periphery. The groove 168 is sized to allow some movement of the rivets within the groove, for example, to allow the lid to lift to allow the escape of steam during cooking. This movement is in a vertical direction, that is, away from the pot body. The groove 168 is connected to two diametrically opposed channels 172, 174. These channels 172, 174 are sized to allow the rivets 152, 154, 156, 158 extending through the side wall 142 of the pot body 110 to engage with the groove 168 when the pot lid 120 is placed on the pot body 110. Channel 172 is shown more clearly in Figure 2 and it will be appreciated that channel 174, although not shown in Figure 2, is identical to channel 172.

The channels 172, 174 are sized to allow the pot lid 120 to pass over both rivets holding the handles 146, 148 in place against the pot body 110 so that the rivets 152, 154, 156, 158 engage with the groove 168.

The pot holder 130 is shaped and sized to receive the pot body 110 and serves the purpose of providing an insulator for the pot body 110. This keeps the pot body 110 and its contents warm after the pot body has been removed from the cooker. The pot holder 130 also protects any surface onto which the pot body 110 is to be put, for example, a dining table for serving food directly from the pot body 110.

The pot holder 130, when not being used with the pot body 110, may be used as a mixing receptacle or a serving receptacle for salads, vegetables, etc. In addition, the pot holder 130 may include markings so that it can also be used as a measuring receptacle.

Additionally, the pot holder 130 includes lip portions 182, 184 which receive the handles 146, 148 when the pot body 110 is positioned within the pot holder 130. Alternatively, items or liquid in the pot holder 130 can be served or dispensed through the lip portions 182, 184 when used as a mixing, measuring or serving receptacle. The pot holder 130 may be made from melamine or any other suitable insulating material. It can also be coloured to match other components of the cookware set, such as, exteriors of cooking pots, frying pans, handles etc.

It will be appreciated that the pot holder 130 is not essential to the present invention but provides an additional feature of the cookware set of which the cooking pot assembly 100 forms a part.

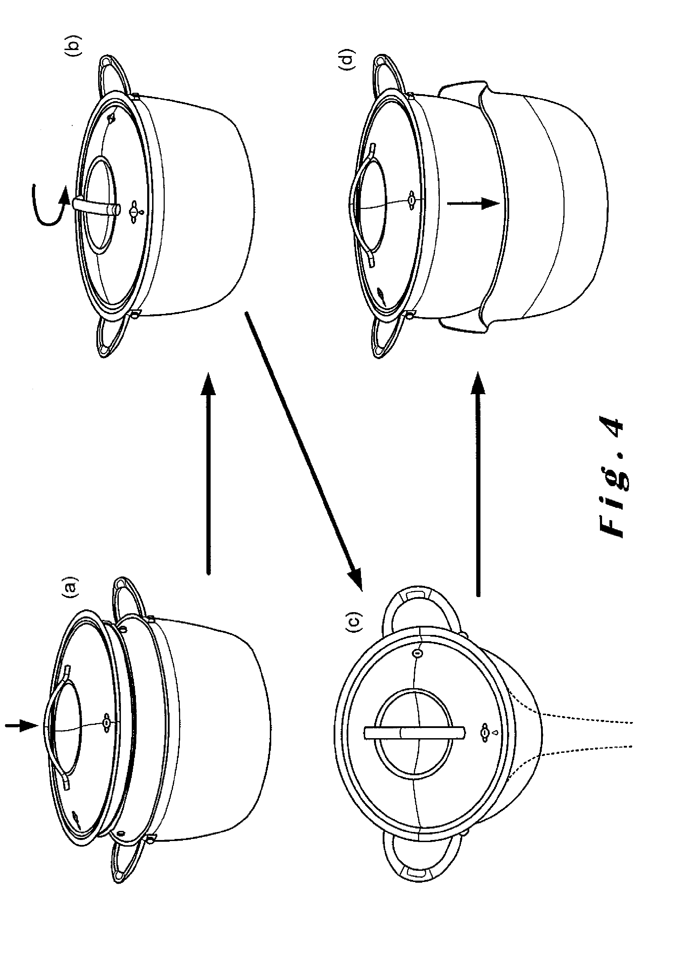

In accordance with the present invention, the co-operation of the pot lid 120 and the pot body 110 maintains the pot lid 120 in place on the pot body 110 whilst still allowing liquid to be drained from the cooking pot assembly as will be described in more detail below with reference to Figure 4.

The lid portion 162 includes a first symbol 192 indicating the location of one of the channels 172, 174 and a second symbol 194 indicating the locked position and the location through which liquid can be drained from the pot body 110 when the pot lid 120 is locked with respect to the pot body 110. Such symbols may take any suitable form that indicates the open and locked positions.

It will readily be appreciated that, in the embodiment described with reference to Figures 1 and 2, the pot lid 120 can be placed on the pot body 110 in one of two orientations. This is because there are two handles 146, 148 and therefore two channels 172, 174 connected with the groove 168 for receiving the rivets 152, 154, 156, 158 associated with each handle 146, 148. In this embodiment, there are substantially two locked positions at 90° that are located between the two handle positions. However, it will be appreciated that more than two locked positions may be provided at different angles, for example, 15°, 30°, 45°, 60°, 75°, 105°, 120°, 135°, 150°, and 165°.

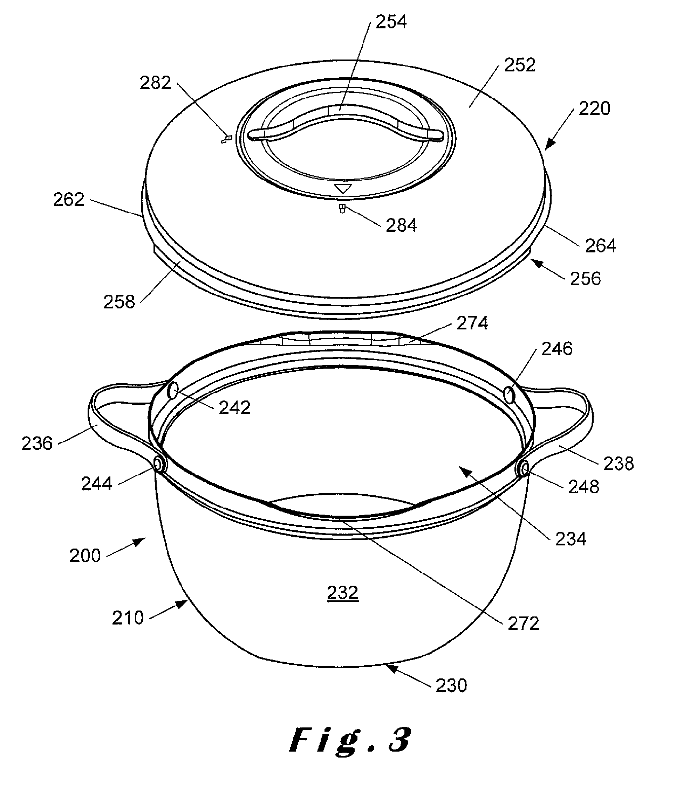

Figure 3 illustrates a second embodiment of a cooking pot assembly 200 in accordance with the present invention. The assembly comprises a pot body 210, and a pot lid 220. A pot holder (not shown) may also form part of the cooking pot assembly but, it will be appreciated that the pot holder is not essential to the present invention.

The pot body 210 comprises a base 230 and a substantially cylindrical side wall 232 which defines an open top portion 234 onto which the pot lid 220 is placed. Two handles 236, 238 are mounted close to the open top portion 234 and are diametrically opposed on the side wall 232 as shown. Each handle 236, 238 is fixed to the side wall 232 by rivets 242, 244, 246, 248. Each rivet 242, 244, 246, 248 extends through the side wall 232 as shown.

The pot lid 220 comprises a lid portion 252 on which a handle 254 is mounted. A downwardly extending skirt portion 256 is attached to the lid portion 252. The skirt portion 256 includes a groove 258 that extends around its periphery. The groove 258 is connected to two diametrically opposed channels 262, 264 to engage with the rivets 242, 244, 246, 248 extending through the side wall 232 of the pot body 210 when the pot lid 220 is placed on the pot body 210. Channels 262, 264 are similar to channel 172 shown in Figure 2.

The groove 258 and channels 262, 264 are sized as described above with reference to Figures 1 and 2.

In this embodiment of the cooking pot assembly, the pot body 210 also includes first and second spouts 272, 274 which assist in the draining of liquid from the pot and lid assembly. However, it will be appreciated that a single spout can be formed in the pot body at any suitable position forming a locked position.

The lid portion 252 includes a first symbol 282 indicating the location of one of the channels 262, 264 and a second symbol 284 indicating the locked position and the location through which liquid can be drained from the pot body 210 when the pot lid 220 is locked with respect to the pot body 210.

In another embodiment of the cooking pot assembly in accordance with the present invention (not shown), a single handle may be provided on one side of the pot body. In this case, only one set of rivets need be provided for engagement with the groove in the pot lid. In this case, the pot lid can be put onto the pot body in only one orientation although more than one locked position is then automatically provided. Alternatively, if a single long handle is used, the rivets may be replaced by a bolt extending from the inside of the pot body into the handle. In this case, it will readily be appreciated that the channels and groove will be sized accordingly.

Figure 4 illustrates the four steps of operation of the cooking pot assembly of either Figure 1 or Figure 2. The first step, indicated by (a), comprises placing the pot lid onto the pot body. Here, the channels need to be aligned with the handles so that the rivets can be inserted through the channels and into the groove formed in the skirt portion of the pot lid. Once the pot lid has been placed on the pot body, the pot lid is rotated through 90°, as indicated by (b), so that the rivets are retained within the grooves and the pot lid is locked with respect to the pot body whilst still having some vertical movement relative to the pot body. In this position, liquid can be drained from the pot and lid assembly as indicated by (c). After draining, the pot and lid assembly may be inserted into the pot holder and the pot lid can be returned to its original position, as indicated by (d). Alternatively, the pot lid can be rotated a further 90° so that the channels align with opposite handles. Once the channels are aligned with the handles, the pot lid can be removed from the pot body.

As described above, angles other than 90° can be used for the locked position, particularly if a single handle is provided on the pot body.

It will readily be appreciated that the handles used on the pot lids and pot bodies may differ. For example, solid insulated handles may be provided instead of those shown in the Figures. In addition, the pot lids may also be domed or substantially flat.

In addition, the pot holder shown in Figures 1 and 2 may be provided with a single lip portion to align with a single handle. Alternatively, no lip portion is provided and the pot holder has a height that is suitable to accommodate the pot body up to the height of its handles.

The cookware to which the present invention is applied may be stainless steel saucepans and casseroles with encapsulated aluminium bases. However, the present invention can be applied to any type of saucepan or casserole.

## Claims

1. A cooking pot assembly (100; 200) comprising:-
a pot body (110; 210) including a circumferential side wall (142; 232);
at least one handle (146, 148; 236, 238) fixed to the pot body (110; 210) with at least one fixing element (152, 154, 156, 158; 242, 244, 246, 248) that extend through the side wall (142; 232) of the pot body (110; 210); and
a pot lid (120; 220) having a handle portion (164; 254) and a skirt portion (166; 256), the skirt portion (166; 256) fitting within the circumferential side wall (142; 232) of the pot body (110; 210);
**characterised in that** the skirt portion (166; 256) comprises a groove (168; 266) extending around the periphery thereof, and at least one channel (172, 174; 262, 264) formed in the skirt portion (166; 256) and extending into the groove (168; 266), each channel (172, 174; 262; 264) being operable to receive the at least one fixing element (152, 154, 156, 158; 242, 244, 246, 248) when the pot lid (120; 220) is in a first position with respect to the pot body (110; 210), the first position corresponding to an open position;
and **in that** the at least one fixing element (152, 154, 156, 158; 242, 244, 246, 248) is located within the groove (168; 258) when the pot lid (120; 220) is in at least one other position with respect to the pot body (110; 210), each other position corresponding to a locked position.

2. A cooking pot assembly according to claim 1, wherein the at least one fixing element (152, 154, 156, 158; 242, 244, 246, 248) comprises a rivet.

3. A cooking pot assembly according to claim 1 or 2, wherein the pot lid (120; 220) includes a first symbol (192; 282) indicating the open position of the pot lid (120; 220) with respect to the pot body (110; 210), and a second symbol (184; 284) indicating the closed position of the pot lid (120; 220) with respect to the pot body (110; 210).

4. A cooking pot assembly according to any one of the preceding claims, wherein the pot body (210) further comprises at least one spout (272, 274) formed in the side wall (232).

5. A cooking pot assembly according to any one of the preceding claims, further comprising a pot holder (130) into which the pot body (110; 210) can be positioned.

6. A cookware set including at least one cooking pot assembly according to any one of the preceding claims.
